# EUROPÄISCHE PATENTSCHRIFT

(11) **EP 3 650 156 B1**
(45) Veröffentlichungstag und Bekanntmachung des Hinweises auf die Patenterteilung: **06.09.2023**
(21) Anmeldenummer: 18205527.7
(22) Anmeldetag: 09.11.2018
(51) Int. Cl.: B23K 9/028, B23K 9/095, B23K 9/10, B23K 9/16, B23K 9/32, B23K 37/02, G01N 21/00, B23K 101/06

(54) **ORBITALSCHWEISSVORRICHTUNG UND VERFAHREN MIT EINFACHERER HANDHABUNG DER RESTSAUERSTOFFMESSUNG**
ORBITAL WELDING DEVICE AND METHOD WITH EASIER HANDLING OF THE RESIDUAL OXYGEN MEASUREMENT
DISPOSITIF ET MÉTHODE DE SOUDAGE ORBITAL À MANIPULATION FACILITÉE DE LA MESURE DE L'OXYGÈNE RÉSIDUEL

(43) Veröffentlichungstag der Anmeldung: 13.05.2020
(73) Patentinhaber: Illinois Tool Works, Inc., Glenview, Illinois 60025 (US)
(72) Erfinder: TAMM, Markus, 88662 Überlingen (DE); FOH, Marcel, 88677 Markdorf (DE)
(74) Vertreter: HGF

(56) Entgegenhaltungen:
- EP-A1- 0 024 438
- WO-A1-96/11765
- DE-U1-202014 100 241
- JP-A- 2000 137 023
- US-A- 3 534 199
- US-A- 3 688 072
- US-A1- 2012 140 234

## Beschreibung

Die Erfindung betrifft allgemein Orbitalschweißvorrichtungen mit Kammern für Schutzgas.

Der Stand der Technik WO2014130374A1 und WO2015112242A1 zeigt die Verwendung von Sauerstoffsensoren, insbesondere optischen Sauerstoffsensoren, zum Orbitalschwei-βen, teils mit in der Kammer für Schutzgas angeordnetem Sauerstoffsensor.

Aus der EP 024 438 A1 geht eine Orbitalschweißvorrichtung hervor, mit welcher zwei Rohrenden verschweißt werden, wobei während des Fügevorgangs der Verbindungsbereich mit Inert-Erdgas abgedeckt wird.

Aus der US3534199A, welche die Basis für den Oberbegriff des Anspruchs 1 bildet, und aus der US3688072A gehen ebenfalls Orbitalschweißvorrichtungen zum Verschweißen zweier Rohrenden hervor.

Aus der WO 96/11765 A1 ist eine Schweißvorrichtung zum Schweißen von Rohren bekannt, wobei eine Formiereinrichtung vorgesehen ist, welche innerhalb der Rohre angeordnet werden kann, um den Fügebereich von innen mit einem Formiergas zu beaufschlagen.

In der JP 2000 137023 A ist eine Vorrichtung zum Zuführen von Schutzgas beim Schweißen offenbart, wobei diese Vorrichtung ein Quadrupol-Massenspektrometer aufweist, um das zugeführte Schweißgas spektroskopisch im Hinblick auf den Sauerstoffgehalt und Stickstoffgehalt zu untersuchen.

In der DE 20 2014 100 241 U1 ist eine Vorrichtung zum Messen und Sammeln von Sauerstoffkonzentrations-Daten bei Schweißprozessen beschrieben, welche bei einer Orbitalschweißanlage eingesetzt werden kann. Diese Vorrichtung weist einen optischen Sauerstoffsensor auf, der an einer beliebigen Stelle in der Schweißkammer angeordnet sein kann.

Aus der US 2012/0140234 A1 geht eine Vorrichtung zum Messen von Verbrennungsparametern in einer Turbine hervor. Diese Vorrichtung weist eine Lichtquelle und einen optischen Sensor auf, welche jeweils außerhalb der Turbine angeordnet sind und so an die Turbine gekoppelt sind, dass sie eine Verbrennungszone innerhalb der Turbine abtasten können.

Die Erfinder befanden als nachteilig, dass die Sauerstoffmessung noch nicht flexibel genug und/oder umständlich handzuhaben ist.

Die der Erfindung zu Grunde liegende Aufgabe war es, diesen Nachteil zu verbessern. Die Aufgabe wird durch die Erfindung, insbesondere wie sie in den unabhängigen Ansprüchen definiert ist, gelöst.

Insbesondere wird diese Aufgabe gelöst durch eine Orbitalschweißvorrichtung zum Verschweißen zweier Rohrstücke, wobei die Orbitalschweißvorrichtung eine Schweißstromquelle in einem Schweißstromquellengehäuse aufweist und einen von dem Schweißstromquellengehäuse separaten, an die Schweißstromquelle mittels eines Kabels angeschlossenen Orbitalschweißkopf, wobei der Orbitalschweißkopf eine Kammer zur Verwendung Schutzgas aufweist, welche bevorzugt eingerichtet ist, während eines Schweißprozesses eine Schwei-βelektrode des Orbitalschweißkopfes zu umgeben und nach außen hin im Wesentlichen abzuschließen, und/oder wobei die Orbitalschweißvorrichtung eine Formiereinrichtung zur Verwendung von Schutzgas, bevorzugt Wurzelschutzgas bzw. Formiergas (engl. purge gas), aufweist, wobei die Orbitalschweißvorrichtung einen Sauerstoffsensor, bevorzugt zur Messung einer Sauerstoffkonzentration im Schutzgas, aufweist, wobei der Sauerstoffsensor in oder an dem Schweißstromquellengehäuse angeordnet ist.

Hierdurch wird auf erfinderische Weise eine Schweißvorrichtung bereitgestellt, mit der es möglich ist in einfacher Art und Weise Sauerstoffkonzentrationen an verschiedenen Orten mit bevorzugt demselben Sauerstoffsensor zu messen, insbesondere auch im Schutzgas, bevor es in die Kammer oder das Rohrinnere zur Verbindungsstelle der Rohrstücke geleitet wurde, d.h. im Frischgas, denn in oder an dem Schweißstromquellengehäuse ist der Sauerstoffsensor zentral gelegen und kann somit einfach für verschiedene Messungen verwendet werden. Bevorzugt ist dabei der Sauerstoffsensor eingerichtet, eine Sauerstoffkonzentration im Schutzgas zu messen, bevor es in die Kammer oder (bevorzugt über die Formiereinrichtung in zumindest eines der zu verschweißenden Rohrstücke) zur Verbindungsstelle der Rohrstücke eingeleitet wurde. In oder an dem Schweißstromquellengehäuse angeordnet bedeutet bevorzugt, dass der Sauerstoffsensor dort befestigt ist und dort auch für die vorgesehenen Sauerstoffmessungen verbleibt oder verbleiben kann. Durch die Anordnung in oder an dem Schweißstromquellengehäuse wird zudem die Handhabung gegenüber separaten Handgeräten erleichtert.

Bei der Orbitalschweißvorrichtung gemäß der Erfindung ist vorgesehen, dass die Orbitalschweißvorrichtung eine Umschalteinrichtung aufweist, welche eingerichtet ist, zwischen einem ersten Zustand und mindestens einem weiteren Zustand umzuschalten, wobei in dem ersten Zustand der Sauerstoffsensor eingerichtet ist, die Sauerstoffkonzentration im Schutzgas zu messen, bevor es in die Kammer oder zumindest eines der zu verschweißenden Rohrstücke zur Verbindungsstelle der Rohrstücke eingeleitet wurde, und wobei in dem mindestens einen weiteren Zustand der Sauerstoffsensor eingerichtet ist, die Sauerstoffkonzentration in der Kammer oder im Inneren zumindest eines der zu verschweißenden Rohrstücke zu messen.

Hierdurch ist mit nur einem Sauerstoffsensor die Sauerstoffkonzentration an mindestens zwei verschiedenen Messorten bestimmbar.

Insbesondere wird diese Aufgabe weiterhin gelöst durch ein Verfahren zum Verschweißen zweier Rohrstücke mit einer Orbitalschweißvorrichtung, wobei die Orbitalschweißvorrichtung eine Schweißstromquelle in einem Schweißstromquellengehäuse aufweist und einen von dem Schweißstromquellengehäuse separaten, an die Schweißstromquelle mittels eines Kabels angeschlossenen Orbitalschweißkopf, wobei der Orbitalschweißkopf eine Kammer für Schutzgas aufweist, welche bevorzugt eingerichtet ist, während eines Schweißprozesses eine Schweißelektrode des Orbitalschweißkopfes zu umgeben und nach außen hin im Wesentlichen abzuschließen, und die Orbitalschweißvorrichtung eine Formiereinrichtung zur Verwendung von Schutzgas, bevorzugt Wurzelschutzgas bzw. Formiergas, aufweist, wobei die Orbitalschweißvorrichtung einen in eine Komponente der Orbitalschweißvorrichtung integrierten Sauerstoffsensor aufweist, wobei eine Sauerstoffkonzentration im Schutzgas gemessen wird, bevor es in die Kammer und über die Formiereinrichtung in zumindest eines der zu verschweißenden Rohrstücke zur Verbindungsstelle der Rohrstücke eingeleitet wird.

Hierdurch ist die Qualität des Schutzgases bestimmbar. Wenn zum Beispiel das Schutzgas zu viel Sauerstoff enthält, kann diese Fehlerquelle gefunden werden und eine andere Gasflasche verwendet werden.

Das Schutzgas zum Formieren und das Schutzgas für den Rohraußenmantel, d.h. die Kammer, können verschiedene Schutzgase, d.h. z.B. aus verschiedenen Gasflaschen, sein. Alternativ ist das Schutzgas zum Formieren dasselbe, welches auch für den Rohraußenmantel verwendet wird.

Integriert an einer anderen Komponente bedeutet bevorzugt, dass der Sauerstoffsensor
- in oder an dem Schweißstromquellengehäuse
- oder in oder an dem Orbitalschweißkopf
- oder in oder an der Formiereinrichtung,
- oder in oder an einer Gasleitung zwischen Orbitalschweißkopf oder Formiereinrichtung und Gasquelle oder in oder an dem Kabel
befestigt ist und dort auch für die vorgesehenen Sauerstoffmessungen verbleibt oder verbleiben kann.

Bevorzugt hat das Kabel eine Mindestlänge von 1 m, bevorzugt 2m, besonders bevorzugt 5m. Die Schweißstromquelle ist bevorzugt stationär, während der Orbitalschweißkopf manuell portabel ist. Bevorzugt ist in oder am Schweißstromquellengehäuse ein Schweißstromquellencontroller angeordnet. Bevorzugt weist der Orbitalschweißkopf eine Rohrhalterung und einen gegenüber der Rohrhalterung drehbar gelagerten Schweißelektrodenhalter zur Halterung der Schweißelektrode auf. Bevorzugt weist die Orbitalschweißvorrichtung einen, bevorzugt durch einen Motorcontroller, besonders bevorzugt den Schweißstromquellencontroller, der Orbitalschweißvorrichtung angesteuerten, bevorzugt elektrischen Motor auf, welcher eingerichtet ist, den Schweißelektrodenhalter anzutreiben und ihn so gegenüber der Rohrhalterung zu verdrehen. Die Rohrhalterung ist bevorzugt eine zangenartige Klemmhalterung.

Der Sauerstoffsensor ist bevorzugt über ein Kabel oder über eine drahtlose Datenverbindung an den Schweißstromquellencontroller zur Übertragung des Messsignals bzw. der Messdaten angebunden.

Die Kammer ist bevorzugt derart ausgestaltet, dass die Rohrstücke, welche aneinandergeschweißt werden sollen, an den zu verbindenden Enden von der Kammer umschlossen sind. Die Kammer weist bevorzugt einen Eingang, z.B. mit einem Schlauchanschluss, für Schutzgas auf, mit welchem die Kammer somit gefüllt werden kann. Die vorher vorhandene Luft wird dabei dann durch die zuvor genannten kleinen Spalte oder Öffnungen aus der Kammer gedrängt. Die Kammer kann auch einen dedizierten Gasausgang aufweisen.

Die Kammer ist bevorzugt derart gestaltet, dass die Schweißelektrode in der Kammer um die zu verschweißenden Rohrstücke gedreht werden kann.

Bevorzugt weist der Orbitalschweißkopf ein Gehäuse auf, welches an die Kammer angrenzt und welches z.B. für einen Benutzer einen Griff oder ein Gehäuse für Bedien- oder Schaltelemente und/oder den Motor bildet.

Bevorzugt weist das Schweißstromquellengehäuse in oder an dem Schweißstromquellengehäuse eine Gasleitung auf, an welcher der Sauerstoffsensor so angeordnet ist, so dass eine Sauerstoffkonzentration in der Gasleitung messbar ist, wobei die Gasleitung eingerichtet ist, eine Gasquelle (z.B. eine Gasflasche) mit der Kammer oder der Formiereinrichtung zu verbinden, bzw. ein Teilstück dieser Verbindung zu sein. Bevorzugt sind entlang des Kabels ein oder mehrere Schläuche angeordnet, welche das Schutzgas zur Kammer leiten.

Alternativ oder zusätzlich weißt die Orbitalschweißvorrichtung in dem Orbitalschweißkopf oder zwischen Orbitalschweißkopf und Gasquelle, z.B. entlang des Kabels, eine Gasleitung auf, an welcher der Sauerstoffsensor so angeordnet ist, dass eine Sauerstoffkonzentration in der Gasleitung messbar ist, wobei die Gasleitung eingerichtet ist, eine Gasquelle (z.B. eine Gasflasche) mit der Kammer zu verbinden, bzw. ein Teilstück dieser Verbindung zu sein.

Die Orbitalschweißvorrichtung kann mittels des Sauerstoffsensors eine Sauerstoffkonzentration in der Kammer messen.

Bevorzugt weist die Orbitalschweißvorrichtung eine Ansaugeinrichtung auf, mittels welcher Schutzgas aus der Kammer angesaugt werden kann, so dass darin die Sauerstoffkonzentration gemessen werden kann. Die Ansaugeinrichtung ist bevorzugt in oder an dem Schweißstromquellengehäuse angeordnet.

Bevorzugt weist die Orbitalschweißvorrichtung eine optische Kopplung in die Kammer auf, welche einen optischen Sauerstoffsensor mit dem Inneren der Kammer optisch koppelt, so dass in der Kammer die Sauerstoffkonzentration gemessen werden kann.

Die Orbitalschweißvorrichtung kann mittels des Sauerstoffsensors eine Sauerstoffkonzentration im Inneren zumindest eines der zu verschweißenden Rohrstücke messen. Dabei kann die Sauerstoffkonzentration im Rohrinnenraum direkt aber auch indirekt erfolgen, z.B. indirekt durch Messung der Sauerstoffkonzentration in einem aus dem Rohr austretenden (z.B. durch einen stromabwärtsseitigen Stopfen mit Austrittsöffnung geleiteten) Gasstrahl - dies gilt für jegliche hier erwähnte Messung der Sauerstoffkonzentration im Rohrinnenraum.

Bevorzugt weist die Orbitalschweißvorrichtung eine Ansaugeinrichtung auf, mittels welcher Schutzgas aus dem Inneren des zumindest einem der zu verschweißenden Rohrstücke angesaugt werden kann, so dass darin die Sauerstoffkonzentration gemessen werden kann. Die Ansaugeinrichtung ist bevorzugt in oder an dem Schweißstromquellengehäuse angeordnet.

Bevorzugt weist die Orbitalschweißvorrichtung eine optische Kopplung auf, welche einen optischen Sauerstoffsensor mit dem Innenraum des zumindest einen der zu verschweißenden Rohrstücke optisch koppelt, so dass im Inneren des zumindest einen der zu verschweißenden Rohrstücke die Sauerstoffkonzentration gemessen werden kann.

Bevorzugt ist vorgesehen, dass die Orbitalschweißvorrichtung eingerichtet ist, eine Sauerstoffkonzentration an verschiedenen Orten, gleichzeitig mittels des Sauerstoffsensors zu messen, z.B. an zwei oder mehreren der folgenden Orte
- in der Kammer, bevorzugt dort an mehreren Orten
- im Inneren zumindest eines der zu verschweißenden Rohrstücke, bevorzugt dort an mehreren Orten,
- im Schutzgas, bevor es in die Kammer oder in das Innere eines der zu verschweißenden Rohrstücke zur Verbindungsstelle der Rohrstücke strömt.

Hierdurch ist eine kostengünstige umfassende Sauerstoffmessung möglich. Bevorzugt weist die Orbitalschweißvorrichtung verschiedene Lichtleiter auf, deren eines Ende an den verschiedenen Orten positioniert sind und deren anderes Ende auf den Sensor des in diesem Fall optischen Sauerstoffsensor gebündelt ist. Alternativ weist die Orbitalschweißvorrichtung verschiedene Ansaugkanäle oder -schläuche sowie eine Ansaugeinrichtung auf, mittels welcher Gasproben von den verschiedenen Orten zum Sensor angesaugt werden. Bevorzugt ist die Orbitalschweißvorrichtung eingerichtet, die gleichzeitige Messung an verschiedenen Orten mit einer höheren eingestellten Empfindlichkeit durchzuführen, als wenn mit dem Sensor nur an einem Ort gemessen wird, so dass die durch Messung an mehreren Orten entstehende Mittelung entsprechend kompensiert ist. Z.B. wird bei Messung an zwei Orten die Empfindlichkeit verdoppelt gegenüber einer Messung an nur einem Ort.

Die Umschaltvorrichtung weist bevorzugt ein Umschaltventil auf.

Besonders bevorzugt weist die Umschaltvorrichtung eine optische Umschaltvorrichtung auf, mittels welcher optische Pfade zugeschaltet und getrennt werden können.

Bevorzugt ist vorgesehen, dass die Orbitalschweißvorrichtung einen Schweißstromquellencontroller aufweist und dazu eingerichtet ist, automatisch als Teil eines durch einen elektronischen Rechner, den Schweißstromquellencontroller, durchgeführten Schweiß- und Messprogramms - zunächst die Umschalteinrichtung in den ersten Zustand zu schalten und die Sauerstoffkonzentration im Schutzgas zu messen, bevor es in die Kammer oder zumindest eines der zu verschweißenden Rohrstücke zur Verbindungsstelle der Rohrstücke eingeleitet wurde, und nach einer bestimmten Zeit die Umschalteinrichtung in den mindestens einen weiteren Zustand zu schalten und die Sauerstoffkonzentration in der Kammer oder im Inneren zumindest eines der zu verschweißenden Rohrstücke zu messen.

Hierdurch wird automatisch vor dem Schweißen die Schutzgasqualität bestimmt und danach automatisch die Sauerstoffkonzentration in der Kammer oder im Rohrinnenraum gemessen.

Bevorzugt ist vorgesehen, dass die Orbitalschweißvorrichtung einen weiteren Sauerstoffsensor aufweist, wobei der weitere Sauerstoffsensor eingerichtet ist, die Sauerstoffkonzentration in der Kammer oder im Inneren zumindest eines der zu verschweißenden Rohrstücke zu messen.

Hierdurch wird auf alternative Weise ein Messen an mehreren Orten ermöglicht.

Bevorzugt ist der weitere Sauerstoffsensor in oder am Orbitalschweißkopf oder in oder an der Formiereinrichtung oder der zur Formiereinrichtung oder dem Orbitalschweißkopf führenden Gasleitung angeordnet.

Weiterhin bevorzugt ist vorgesehen, dass die Orbitalschweißvorrichtung eine Speichereinrichtung aufweist und eingerichtet ist, gemessene Restsauerstoffmesswerte
- des Schutzgases, bevor es in die Kammer oder über die Formiereinrichtung in zumindest eines der zu verschweißenden Rohrstücke zur Verbindungsstelle der Rohrstücke eingeleitet wurde, und oder
- des Schutzgases, in der Kammer oder im Inneren zumindest eines der zu verschweißenden Rohrstücke,
in der Speichereinrichtung zu protokollieren.

Hierdurch können im Nachhinein die Korrektheit oder Fehleranfälligkeit von Schweißverbindungen anhand der abgespeicherten Restsauerstoffwerte überprüft werden. Außerdem ist es hierdurch möglich, die Restsauerstoffwerte bequem, ohne manuelles importieren von Daten aus mobilen, separaten Restsauerstoffmessgeräten zusammen mit den Schweißprozessprotokollen aufzubewahren oder sich anzeigen zu lassen. Bevorzugt ist die Speichereinrichtung in oder an dem Schweißstromquellengehäuse angeordnet.

Alternativ weist die Orbitalschweißvorrichtung zum Verschweißen zweier Rohrstücke eine Schweißstromquelle in einem Schweißstromquellengehäuse auf und einen von dem Schweißstromquellengehäuse separaten, an die Schweißstromquelle mittels eines Kabels angeschlossenen Orbitalschweißkopf, wobei die Orbitalschweißvorrichtung eine Formiereinrichtung zur Verwendung von Schutzgas, bevorzugt Wurzelschutzgas bzw. Formiergas, aufweist, welche über eine Gasleitung mit einer Gasquelle verbunden ist, wobei die Orbitalschweißvorrichtung einen Sauerstoffsensor aufweist, wobei der Sauerstoffsensor in oder an der Formiereinrichtung oder der Gasleitung befestigt ist.

Bevorzugt weist die Formiereinrichtung mindestens einen Stopfen auf, wobei der Sauerstoffsensor an einer Halteeinrichtung des Stopfens befestigt ist. Z.B. weist der Stopfen, bevorzugt zentral, einen Hohlstab mit Außengewinde auf. Durch den Hohlstab kann das Formiergas aus dem Rohr wieder ins Freie strömen, wenn der Stopfen stromabwärtsseitig verwendet wird. Durch eine Mutter am Außergewinde kann der Stopfen gequetscht werden, so dass aufgrund der durch die Quetschung bewirkten Vergrößerung des Stopfendurchmessers der Stopfen im Rohr dichtend positionierbar ist. Bevorzugt ist der Sauerstoffsensor in den Hohlstab eingesetzt und/oder daran befestigt, z.B. mittels eines im Hohlstab eingebrachten Innengewindes.

Aspekte der Erfindung sollen nun anhand von Zeichnungen beispielhaft weiter veranschaulicht werden. Hierbei zeigen:
Fig. 1 eine erste Ausführungsform einer Vorrichtung
Fig. 2 basierend auf der ersten Ausführungsform eine zweite Ausführungsform einer Vorrichtung,
Fig. 3a und 3b basierend auf der ersten und zweiten Ausführungsform eine erfindungsgemäße dritte Ausführungsform der Vorrichtung, wobei 3b nur einen Ausschnitt der in Fig. 3a gezeigten Ausführungsform zeigt, wobei die in den vorigen Figuren optionale Formiereinrichtung 90 nicht mehr vorhanden oder gezeigt ist,
Fig. 4 basierend auf der ersten und zweiten Ausführungsform eine vierte Ausführungsform einer Vorrichtung, wobei die in den vorigen Figuren optionale Formiereinrichtung 90 nicht mehr vorhanden oder gezeigt ist.

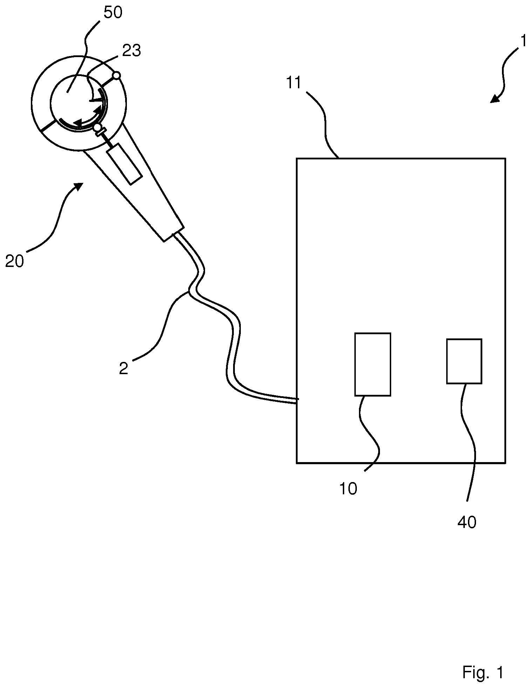

Es folgt eine detailliertere Beschreibung von Fig. 1. Die Ausgestaltung ist derart, dass die Orbitalschweißvorrichtung 1 eine Schweißstromquelle 10 in einem Schweißstromquellengehäuse 11 aufweist und einen von dem Schweißstromquellengehäuse 11 separaten, an die Schweißstromquelle 10 mittels eines Kabels 2 angeschlossenen Orbitalschweißkopf 20, wobei der Orbitalschweißkopf 20 eine Kammer 50 für Schutzgas aufweist, welche eingerichtet ist, während eines Schweißprozesses eine Schweißelektrode 23 des Orbitalschweißkopfes 20 zu umgeben und nach außen hin im Wesentlichen abzuschließen, wobei die Orbitalschweißvorrichtung 1 optional (gepunktet) eine Formiereinrichtung 90 zur Verwendung von Schutzgas, bevorzugt Wurzelschutzgas bzw. Formiergas, aufweist, wobei die Orbitalschweißvorrichtung 1 einen Sauerstoffsensor 40 aufweist, wobei der Sauerstoffsensor 40 in oder an dem Schweißstromquellengehäuse 11 angeordnet ist.

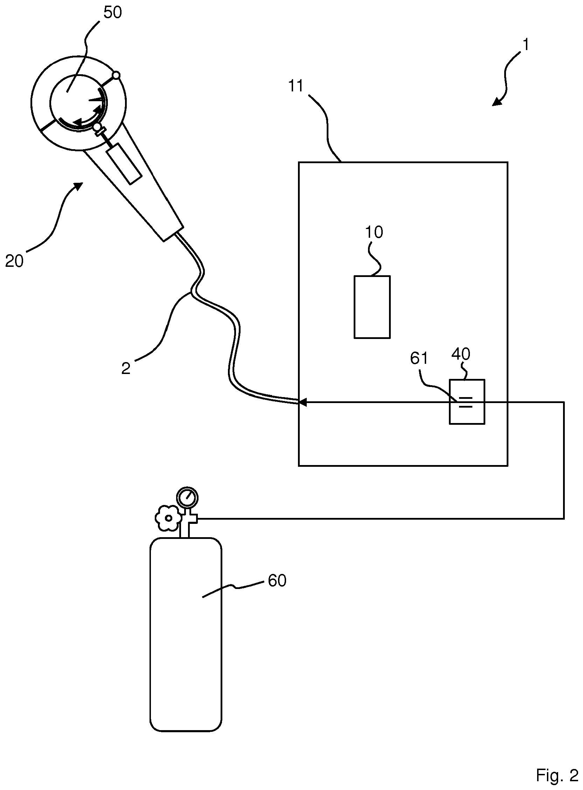

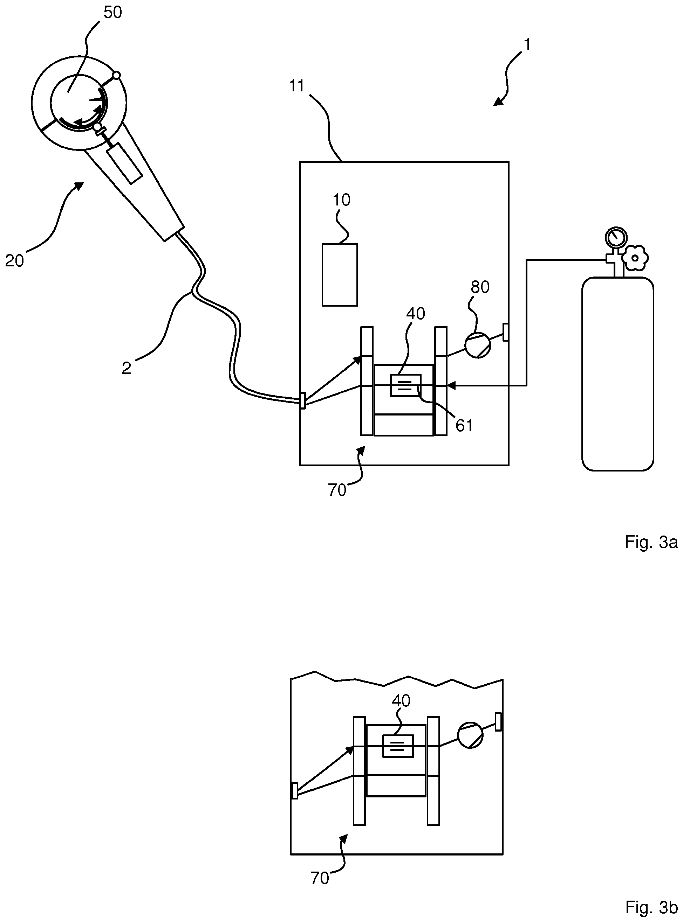

Es folgt eine detailliertere Beschreibung von Fig. 2. Die Ausgestaltung ist derart, dass die Orbitalschweißvorrichtung 1 eine Schweißstromquelle 10 in einem Schweißstromquellengehäuse 11 aufweist und einen von dem Schweißstromquellengehäuse 11 separaten, an die Schweißstromquelle 10 mittels eines Kabels 2 angeschlossenen Orbitalschweißkopf 20, wobei der Orbitalschweißkopf 20 eine Kammer 50 für Schutzgas aufweist, welche eingerichtet ist, während eines Schweißprozesses eine Schweißelektrode 23 des Orbitalschweißkopfes 20 zu umgeben und nach außen hin im Wesentlichen abzuschließen, wobei die Orbitalschweißvorrichtung 1 optional (gepunktet) eine Formiereinrichtung 90 zur Verwendung von Schutzgas, bevorzugt Wurzelschutzgas bzw. Formiergas, aufweist, wobei die Orbitalschweißvorrichtung 1 einen in eine andere Komponente der Orbitalschweißvorrichtung 1 integrierten Sauerstoffsensor 40 aufweist, wobei der Sauerstoffsensor 40 eingerichtet ist, eine Sauerstoffkonzentration im Schutzgas zu messen, bevor es in die Kammer 50 (oder optional auch oder alternativ zur Verbindungsstelle der Rohrstücke über die Formiereinrichtung 90) geleitet wird. Hier weist das Schweißstromquellengehäuse 11 in oder an dem Schweißstromquellengehäuse 11 eine Gasleitung 61 auf, an welcher der Sauerstoffsensor 40 so angeordnet ist, dass eine Sauerstoffkonzentration in der Gasleitung 61 messbar ist, wobei die Gasleitung 61 eingerichtet ist, eine Gasquelle 60 (z.B. eine Gasflasche) mit der Kammer 50 oder optional auch oder alternativ mit der Formiereinrichtung 90 zu verbinden, bzw. ein Teilstück dieser Verbindung zu sein. Hier sind entlang des Kabels 2 ein oder mehrere Schläuche angeordnet, welche das Schutzgas zur Kammer 50 leiten. In diesem Beispiel wird als Formiergas das gleiche Gas verwendet wie für das Schutzgas in der Kammer 50. Es folgt eine detailliertere Beschreibung von Fig. 3a und 3b. In Fig. 3a befindet sich die erfindungsgemäße Umschaltvorrichtung 70 im ersten Zustand, in Fig. b im zweiten Zustand. Die Ausgestaltung ist derart, dass die Orbitalschweißvorrichtung 1 eingerichtet ist, eine Sauerstoffkonzentration in der Kammer 50 zu messen. Hier weist die Orbitalschweißvorrichtung 1 eine Ansaugeinrichtung 80 auf, mittels welcher Schutzgas aus der Kammer 50 angesaugt werden kann, so dass darin die Sauerstoffkonzentration gemessen werden kann. Die Ausgestaltung ist derart, dass die Orbitalschweißvorrichtung 1 eine Umschalteinrichtung 70 aufweist, welche eingerichtet ist, zwischen einem ersten Zustand und einem zweiten Zustand umzuschalten, wobei in dem ersten Zustand der Sauerstoffsensor 40 eingerichtet ist, die Sauerstoffkonzentration im Schutzgas zu messen, bevor es in die Kammer 50 geleitet wird, und wobei in dem zweiten Zustand der Sauerstoffsensor 40 eingerichtet ist, die Sauerstoffkonzentration in der Kammer 50 zu messen. Die Umschaltvorrichtung weist hier ein Umschaltventil auf. Die Ausgestaltung ist derart, dass die Orbitalschweißvorrichtung 1 eingerichtet ist, automatisch als Teil eines durch einen elektronischen Rechner, hier durch den Schweißstromquellencontroller, durchgeführten Schweiß- und Messprogramms zunächst die Umschalteinrichtung 70 in den ersten Zustand zu schalten, die Sauerstoffkonzentration im Schutzgas zu messen, bevor es in die Kammer 50 geleitet wird, und nach einer bestimmten Zeit die Umschalteinrichtung 70 in den zweiten Zustand zu schalten und die Sauerstoffkonzentration in der Kammer 50 zu messen.

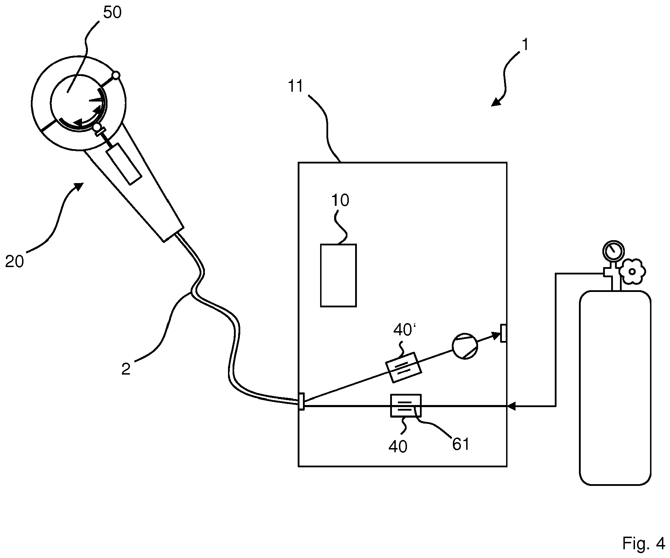

Es folgt eine detailliertere Beschreibung von Fig. 4. Die Ausgestaltung ist derart, dass die Orbitalschweißvorrichtung 1 einen weiteren Sauerstoffsensor 40' aufweist, wobei der weitere Sauerstoffsensor 40' eingerichtet ist, die Sauerstoffkonzentration in der Kammer 50 zu messen, anders als in Fig. 3a und 3b.

### Bezugszeichen

- 1: Orbitalschweißvorrichtung
- 2: Kabel
- 10: Schweißstromquelle
- 11: Schweißstromquellengehäuse
- 20: Orbitalschweißkopf
- 23: Schweißelektrode
- 40: Sauerstoffsensor
- 50: Kammer
- 60: Gasquelle
- 61: Gasleitung
- 70: Umschalteinrichtung
- 80: Ansaugeinrichtung
- 90: Formiereinrichtung
- 40': weiterer Sauerstoffsensor

## Patentansprüche

1. Orbitalschweißvorrichtung (1) zum Verschweißen zweier Rohrstücke, wobei die Orbitalschweißvorrichtung (1) eine Schweißstromquelle (10) in einem Schweißstromquellengehäuse (11) aufweist und einen von dem Schweißstromquellengehäuse (11) separaten, an die Schweißstromquelle (10) mittels eines Kabels (2) angeschlossenen Orbitalschweißkopf (20), wobei der Orbitalschweißkopf (20) eine Kammer (50) zur Verwendung von Schutzgas aufweist und/oder die Orbitalschweißvorrichtung (1) eine Formiereinrichtung zur Verwendung von Schutzgas, bevorzugt Wurzelschutzgas bzw. Formiergas, aufweist, **dadurch gekennzeichnet,**
**dass** die Orbitalschweißvorrichtung (1) einen Sauerstoffsensor (40) aufweist,
wobei der Sauerstoffsensor (40) in oder an dem Schweißstromquellengehäuse (11) angeordnet ist, wobei die Orbitalschweißvorrichtung (1) eine Umschalteinrichtung (70) aufweist, welche eingerichtet ist, zwischen einem ersten Zustand und mindestens einem weiteren Zustand umzuschalten, wobei in dem ersten Zustand der Sauerstoffsensor (40) eingerichtet ist, die Sauerstoffkonzentration im Schutzgas zu messen, bevor es in die Kammer (50) oder zumindest eines der zu verschweißenden Rohrstücke zur Verbindungsstelle der Rohrstücke eingeleitet wurde, und wobei in dem mindestens einen weiteren Zustand der Sauerstoffsensor (40) eingerichtet ist, die Sauerstoffkonzentration in der Kammer (50) oder im Inneren zumindest eines der zu verschweißenden Rohrstücke zu messen.

2. Orbitalschwdeißvorrichtung (1) nach Anspruch 1,
wobei die Orbitalschweißvorrichtung (1) eine Ansaugeinrichtung (80) aufweist, mittels welcher eine Probe des Schutzgases aus der Kammer (50) oder aus dem Inneren des zumindest einen der zu verschweißenden Rohrstücke angesaugt und zu dem Sauerstoffsensor (40) geleitet werden kann, so dass in der Probe die Sauerstoffkonzentration gemessen werden kann
oder
wobei der Sauerstoffsensor (40) ein optischer Sauerstoffsensor ist und die Orbitalschweißvorrichtung (1) eine optische Kopplung aufweist, welche den Sauerstoffsensor (40) mit dem Innenraum der Kammer oder des zumindest einen der zu verschweißenden Rohrstücke optisch koppelt, so dass über die optische Kopplung die Sauerstoffkonzentration in dem entsprechenden Innenraum gemessen werden kann.

3. Orbitalschweißvorrichtung (1) nach einem der vorhergehenden Ansprüche, wobei die Orbitalschweißvorrichtung (1) eingerichtet ist, eine Sauerstoffkonzentration an verschiedenen Orten gleichzeitig mittels des Sauerstoffsensors (40) zu messen.

4. Orbitalschwdeißvorrichtung (1) nach einem der vorhergehenden Ansprüche,
wobei die Orbitalschweißvorrichtung einen Schweißstromquellencontroller aufweist,
wobei der Schweißstromquellencontroller in oder am Schweißstromquellengehäuse angeordnet ist,
wobei die Orbitalschweißvorrichtung (1) eingerichtet ist, automatisch als Teil eines durch den Schweißstromquellencontroller durchgeführten Schweiß- und Messprogramms
- zunächst die Umschalteinrichtung (70) in den ersten Zustand zu schalten und die Sauerstoffkonzentration im Schutzgas zu messen, bevor es in die Kammer (50) oder zumindest eines der zu verschweißenden Rohrstücke zur Verbindungsstelle der Rohrstücke eingeleitet wurde,
- und nach einer bestimmten Zeit die Umschalteinrichtung (70) in den mindestens einen weiteren Zustand zu schalten und die Sauerstoffkonzentration in der Kammer (50) oder im Inneren zumindest eines der zu verschweißenden Rohrstücke zu messen.

5. Orbitalschweißvorrichtung (1) nach einem der vorhergehenden Ansprüche, wobei die Orbitalschweißvorrichtung (1) einen weiteren Sauerstoffsensor (40') aufweist, wobei der weitere Sauerstoffsensor (40') eingerichtet ist, die Sauerstoffkonzentration in der Kammer (50) oder im Inneren zumindest eines der zu verschweißenden Rohrstücke zu messen.

6. Orbitalschweißvorrichtung (1) nach einem der vorhergehenden Ansprüche, wobei die Orbitalschweißvorrichtung (1) eine Speichereinrichtung aufweist und eingerichtet ist, gemessene Restsauerstoffmesswerte
- des Schutzgases, bevor es in die Kammer (50) oder über die Formiereinrichtung (90) in zumindest eines der zu verschweißenden Rohrstücke zur Verbindungsstelle der Rohrstücke eingeleitet wurde, und oder
- des Schutzgases, in der Kammer (50) oder im Inneren zumindest eines der zu verschweißenden Rohrstücke,in der Speichereinrichtung zu protokollieren.

7. Verfahren zum Verschweißen zweier Rohrstücke mit einer Orbitalschweißvorrichtung (1),
wobei eine Orbitalschweißvorrichtung (1) nach einem der Ansprüche 1 bis 6 verwendet wird,
wobei mit dem Sauerstoffsensor (40) eine Sauerstoffkonzentration im Schutzgas gemessen wird, bevor es in die Kammer (50) und bevor es zur Verbindungsstelle der Rohrstücke eingeleitet wird.

## Claims

1. An orbital welding apparatus (1) for welding two pipe pieces, wherein the orbital welding apparatus (1) comprises a welding power source (10) in a welding power source housing (11) and an orbital welding head (20), which is separate from the welding power source housing (11) and connected to the welding power source (10) by means of a cable (2), wherein the orbital welding head (20) comprises a chamber (50) for using inert gas and/or the orbital welding apparatus (1) comprises a shaping device for using inert gas, preferably backing gas or forming gas, **characterized in that** the orbital welding apparatus (1) comprises an oxygen sensor (40), wherein the oxygen sensor (40) is arranged in or on the welding power source housing (11) wherein the orbital welding apparatus (1) comprises a switching device (70), which is configured so as to switch between a first state and at least one further state, wherein, in the first state, the oxygen sensor (40) is configured so as to measure the oxygen concentration in the inert gas before it has been introduced into the chamber (50) or at least one of the pipe pieces to be welded to the junction of the pipe pieces, and wherein, in the at least one further state, the oxygen sensor (40) is configured so as to measure the oxygen concentration in the chamber (50) or inside at least one of the pipe pieces to be welded.

2. The orbital welding apparatus (1) according to claim 1, wherein the orbital welding apparatus (1) comprises an intake device (80) by means of which a sample of the inert gas can be sucked from the chamber (50) or from the interior of the at least one of the pipe pieces to be welded and conducted to the oxygen sensor (40) so that the oxygen concentration in the sample can be measured, or wherein the oxygen sensor (40) is an optical oxygen sensor and the orbital welding apparatus (1) comprises an optical coupling which optically couples the oxygen sensor (40) to the interior of the chamber or the at least one of the pipe pieces to be welded, so that the oxygen concentration in said interior can be measured via the optical coupling.

3. The orbital welding apparatus (1) according to any one of the preceding claims, wherein the orbital welding apparatus (1) is configured so as to simultaneously measure an oxygen concentration at various locations by means of the oxygen sensor (40) .

4. The orbital welding apparatus (1) according to any one of the preceding claims, wherein the orbital welding apparatus comprises a welding power source controller, wherein the welding power source controller is arranged in or on the welding power source housing, wherein the orbital welding apparatus (1) is configured so as to do the following, automatically as part of a welding and measuring program carried out by the welding current source controller:
- first, switch the switching device (70) to the first state and measure the oxygen concentration in the inert gas before it has been introduced into the chamber (50) or at least one of the pipe pieces to be welded to the junction of the pipe pieces,
- then, after a certain time, switch the switching device (70) to the at least one further state and measure the oxygen concentration in the chamber (50) or inside at least one of the pipe pieces to be welded.

5. The orbital welding apparatus (1) according to any one of the preceding claims, wherein the orbital welding apparatus (1) comprises a further oxygen sensor (40'), wherein the further oxygen sensor (40') is configured so as to measure the oxygen concentration in the chamber (50) or inside at least one of the pipe pieces to be welded.

6. The orbital welding apparatus (1) according to any one of the preceding claims, wherein the orbital welding apparatus (1) comprises a storage device and is configured so as to record in the storage device residual oxygen readings
- of the inert gas before it has been introduced into the chamber (50) or, via the shaping device (90), into at least one of the pipe pieces to be welded to the junction of the pipe pieces, and or
- of the inert gas in the chamber (50) or inside at least one of the pipe pieces to be welded.

7. A method for welding two pipe pieces to an orbital welding apparatus (1), wherein an orbital welding apparatus (1) according to any one of claims 1 to 6 is used, wherein an oxygen concentration in the inert gas is measured with the oxygen sensor (40) before it is introduced into the chamber (50) and before it is introduced to the junction of the pipe pieces.

## Revendications

1. L'invention concerne un appareil de soudage orbital (1) pour souder deux pièces tubulaires, l'appareil de soudage orbital (1) comprenant
une source d'alimentation de soudage (10) dans un logement de source d'alimentation de soudage (11) et une tête de soudage orbitale (20), qui est séparée du logement de source d'alimentation de soudage (11) et connectée à la source d'alimentation de soudage (10) au moyen d'un câble (2), dans lequel la tête de soudage orbital (20) comprend une chambre (50) pour l'utilisation d'un gaz inerte et/ou l'appareil de soudage orbital (1) comprend un dispositif de mise en forme pour l'utilisation d'un gaz inerte, de préférence un gaz de réserve ou un gaz de formation, **caractérisé en ce que** l'appareil de soudage orbital (1) comprend un capteur d'oxygène (40), dans lequel le capteur d'oxygène (40) est agencé dans ou sur le logement de source d'alimentation de soudage (11) dans lequel l'appareil de soudage orbital (1) comprend un dispositif de commutation (70), qui est configuré de manière à commuter entre un premier état et au moins un état supplémentaire, dans lequel, dans le premier état, le capteur d'oxygène (40) est configuré de manière à mesurer la concentration en oxygène dans le gaz inerte avant qu'il n'ait été introduit dans la chambre (50) ou au moins une parmi les pièces tubulaires à souder à la jonction des pièces tubulaires, et dans lequel, dans l'au moins un état supplémentaire, le capteur d'oxygène (40) est configuré de manière à mesurer la concentration en oxygène dans la chambre (50) ou à l'intérieur d'au moins une parmi les pièces tubulaires à souder.

2. Appareil de soudage orbital (1) selon la revendication 1, dans lequel l'appareil de soudage orbital (1) comprend un dispositif d'admission (80) au moyen duquel un échantillon du gaz inerte peut être aspiré à partir de la chambre (50) ou à partir de l'intérieur de l'au moins une parmi les pièces tubulaires à souder et conduit au capteur d'oxygène (40) de sorte que la concentration en oxygène dans l'échantillon peut être mesurée, ou dans lequel le capteur d'oxygène (40) est un capteur d'oxygène optique et l'appareil de soudage orbital (1) comprend un couplage optique qui couple optiquement le capteur d'oxygène (40) à l'intérieur de la chambre ou l'au moins une parmi les pièces tubulaires à souder, afin que la concentration en oxygène dans ledit intérieur puisse être mesurée via le couplage optique.

3. Appareil de soudage orbital (1) selon l'une quelconque des revendications précédentes, dans lequel l'appareil de soudage orbital (1) est configuré de manière à mesurer simultanément une concentration en oxygène à divers emplacements au moyen du capteur d'oxygène (40).

4. Appareil de soudage orbital (1) selon l'une quelconque des revendications précédentes, dans lequel l'appareil de soudage orbital comprend un dispositif de commande de source d'alimentation de soudage, dans lequel le dispositif de commande de source d'alimentation de soudage est agencé dans ou sur le logement de source d'alimentation de soudage, dans lequel l'appareil de soudage orbital (1) est configuré de manière à effectuer ce qui suit, automatiquement en tant que partie d'un programme de soudage et de mesure exécuté par le dispositif de commande de source de courant de soudage :
- d'abord, commuter le dispositif de commutation (70) dans le premier état et mesurer la concentration en oxygène dans le gaz inerte avant qu'il n'ait été introduit dans la chambre (50) ou au moins une parmi les pièces tubulaires à souder à la jonction des pièces tubulaires,
- ensuite, après un certain temps, commuter le dispositif de commutation (70) dans l'au moins un état supplémentaire et mesurer la concentration en oxygène dans la chambre (50) ou à l'intérieur d'au moins une parmi les pièces tubulaires à souder.

5. Appareil de soudage orbital (1) selon l'une quelconque des revendications précédentes, dans lequel l'appareil de soudage orbital (1) comprend un capteur d'oxygène supplémentaire (40'), dans lequel le capteur d'oxygène supplémentaire (40') est configuré de manière à mesurer la concentration d'oxygène dans la chambre (50) ou à l'intérieur d'au moins une parmi les pièces tubulaires à souder.

6. Appareil de soudage orbital (1) selon l'une quelconque des revendications précédentes, dans lequel l'appareil de soudage orbital (1) comprend un dispositif de stockage et est configuré de manière à enregistrer dans le dispositif de stockage des lectures d'oxygène résiduel
- du gaz inerte avant qu'il n'ait été introduit dans la chambre (50) ou, via le dispositif de mise en forme (90), dans au moins une parmi les pièces tubulaires à souder à la jonction des pièces tubulaires, et ou
- du gaz inerte dans la chambre (50) ou à l'intérieur d'au moins une parmi les pièces tubulaires à souder.

7. Procédé de soudage de deux pièces tubulaires sur un appareil de soudage orbital (1), dans lequel un appareil de soudage orbital (1) selon l'une quelconque des revendications 1 à 6 est utilisé, dans lequel une concentration en oxygène dans le gaz inerte est mesurée avec le capteur d'oxygène (40) avant qu'il ne soit introduit dans la chambre (50) et avant qu'il ne soit introduit dans la jonction des pièces tubulaires.
